# EUROPÄISCHE PATENTANMELDUNG

(11) **EP 0 764 796 A2**
(43) Veröffentlichungstag der Anmeldung: **26.03.1997**
(21) Anmeldenummer: 96110421.3
(22) Anmeldetag: 27.06.1996
(51) Int. Cl.: F16F 13/14

(54) **Hydraulisch gedämpftes Lager**

(30) Priorität: 31.08.1995 DE 29514004 U
(71) Anmelder: Fiedler, Kurt, 65468 Geinsheim (DE)
(72) Erfinder: Fiedler, Kurt, 65468 Geinsheim (DE)
(74) Vertreter: Schaumburg, Thoenes & Thurn

(57) **Zusammenfassung**

Beschrieben wird ein hydraulisch gedämpftes Lager zur schwingungsgedämpften Aufhängung einer Einheit in einem Rahmen, z.B. zur schwingungsgedämpften Lagerung eines Motors. Das Lager hat ein Lagerelement (24, 44), das mit dem Rahmen (12) verbunden ist, ein Tragelement (18, 42), das mit dem Rahmen (12) verbunden ist, und einen zwischen Lagerelement (24, 44) und Tragelement (18, 42) angeordneten elastischen Tragkörper (26, 46), der entlang einer ersten Schwingungsachse (SA1, S1) und mindestens einer zweiten Schwingungsachse (SA2, S2) komprimierbar ist und der einen mit Dämpfungsflüssigkeit gefüllten ersten komprimierbaren Hohlraum (28, 74) und mindestens einen mit der Dämpfungsflüssigkeit gefüllten und mit dem ersten Hohlraum (28, 74) durch ein Verbindungselement verbundenen zweiten komprimierbaren Hohlraum (30, 76) enthält. Der erste Hohlraum (28, 74) ist zumindest annähernd im Bereich der ersten Schwingungsachse (SA1, S1) angeordnet. Der zweite Hohlraum (30, 76) ist zumindest annähernd im Bereich der zweiten Schwingungsachse (SA2, S2) vorgesehen, deren Verlauf von dem der ersten Schwingungsachse (SA1, S1) verschieden ist.

## Beschreibung

Die Erfindung betrifft ein hydraulisch gedämpftes Lager zur schwingungsgedämpften Aufhängung einer Einheit in einem Rahmen, insbesondere zur schwingungsgedämpften Aufhängung eines Motors und/oder eines Getriebes in einem Kraftfahrzeugrahme, mit einem Lagerelement, das mit der Einheit bzw. dem Rahmen verbunden ist, einem Tragelement, das mit dem Rahmen bzw. der Einheit verbunden ist, und mit einem zwischen Lagerelement und Tragelement angeordneten elastischen Tragkörper, der entlang einer ersten und mindestens einer zweiten Schwingungsachse komprimierbar ist und der einen mit Dämpfungsflüssigkeit gefüllten ersten komprimierbaren Hohlraum und mindestens einen mit der Dämpfungsflüssigkeit gefüllten und mit dem ersten Hohlraum durch ein Verbindungselement verbundenen zweiten komprimierbaren Hohlraum enthält, wobei der erste Hohlraum zumindest annähernd im Bereich der ersten Schwingungsachse angeordnet ist.

Es ist bekannt, hydraulisch gedämpfte Lager zur schwingungsgedämpften Aufhängung einer mit Eigenfrequenz schwingenden Einheit in einem Rahmen zu verwenden, um die durch das Schwingen der Einheit verursachten Belastungen am Rahmen gering zu halten. So werden hydraulisch gedämpfte Lager dazu verwendet, Motoren, die aufgrund unausgeglichener Massenkräfte und Momente oder durch Drehzahlwechsel beim abwechselnden Abbremsen und Beschleunigen in Schwingung geraten, schwingungsgedämpft im Fahrzeugrahmen aufzuhängen.

Bekannte hydraulisch gedämpfte Lager sind mit einem Lagerelement, das mit der Einheit bzw. mit dem Rahmen verbunden ist, und einem Tragelement, das mit dem Rahmen bzw. der Einheit verbunden ist, ausgestattet. Zwischen Lagerelement und Tragelement ist ein elastischer Tragkörper angeordnet, der entlang einer ersten Schwingungsachse der Einheit komprimierbar ist. Zur Erhöhung der Dämpfungseigenschaften des Lagers sind innerhalb des Tragkörpers ferner zwei mit Dämpfungsflüssigkeit gefüllte Hohlräume im Bereich der ersten Schwingungsachse angeordnet, die über ein Verbindungselement miteinander verbunden sind.

Sobald die Einheit innerhalb des Rahmens in Schwingung gerät, kommt es zu einer Relativbewegung zwischen Lagerelement und Tragelement entlang der ersten Schwingungsachse. Aufgrund dieser Relativbewegung wird der zwischen Lagerelement und Tragelement angeordnete elastische Tragkörper entlang der Schwingungsachse zuerst komprimiert, wobei sich das Volumen des ersten Hohlraumes verringert, während gleichzeitig das Volumen des zweiten Hohlraumes vergrößert wird. Bei der anschließenden Dehnung des Tragkörpers entlang der ersten Schwingungsachse wird das Volumen des ersten Hohlraumes vergrößert, während sich das des zweiten Hohlraumes verringert. Verursacht durch diese Volumenänderungen wird die Dämpfungsflüssigkeit über das Verbindungselement zwischen den beiden Hohlräumen hin- und hergepumpt, wodurch die Schwingungen der Einheit gedämpft werden.

Bei Schwingungen, die entlang einer von der ersten Schwingungsachse verschiedenen zweiten Schwingungsachse erfolgen, ändern sich die Volumina der Hohlräume nur geringfügig, verglichen zu den Volumenänderungen bei Schwingungen entlang der ersten Schwingungsachse. Dadurch wird weniger Dämpfungsflüssigkeit zwischen den beiden Hohlräumen hin- und hergepumpt, so daß sich eine geringere Dämpfungswirkung des Lagers ergibt.

Es ist Aufgabe der Erfindung, ein hydraulisch gedämpftes Lager bereitzustellen, das in Richtung verschiedener Schwingungsachsen Schwingungen dämpft.

Die Erfindung löst diese Aufgabe bei einem hydraulisch gedämpften Lager eingangs genannter Art dadurch, daß der zweite Hohlraum zumindest annähernd im Bereich der zweiten Schwingungsachse angeordnet ist, deren Verlauf von dem der ersten Schwingungsachse verschieden ist.

Bei dem hydraulisch gedämpften Lager nach der Erfindung werden die beiden Hohlräume derart im elastischen Tragkörper angeordnet, daß die Hohlräume im Bereich vorgegebener unterschiedlicher Schwingungsachsen liegen. Ein Hohlraum kann z.B. längs einer ersten Schwingungsachse angeordnet sein; ein weiterer Hohlraum längs einer zweiten Schwingungsachse Schwingt die Einheit innerhalb des Rahmens in Richtung der ersten Schwingungsachse, kommt es zu einer Volumenänderung des ersten Hohlraumes, während der zweite Hohlraum im Vergleich dazu eine wesentlich geringere Volumenänderung erfährt. Durch die unterschiedlichen Volumenänderungen der beiden Hohlräume während des Schwingens muß die Dämpfungsflüssigkeit aus dem ersten Hohlraum durch das Verbindungselement gegen den im zweiten Hohlraum wirkenden Druck in den zweiten Hohlraum gepumpt werden, wodurch die Bewegung des Lagerelementes relativ zum Tragelement in Richtung der ersten Schwingungsachse gedämpft wird.

Schwingt die Einheit in Richtung der zweiten Schwingungsachse, deren Verlauf von dem der ersten Schwingungsachse verschieden ist, kommt es zu einer Volumenänderung des zweiten Hohlraums, die sehr viel größer ist als die Volumenänderung des ersten Hohlraums. Dadurch muß die Dämpfungsflüssigkeit aus dem zweiten Hohlraum gegen den im ersten Hohlraum wirkenden Druck in den ersten Hohlraum gepumpt werden. Auf diese Weise wird ein Schwingen des Lagerelementes in Richtung der zweiten Schwingungsachse wirksam gedämpft.

Das hydraulisch gedämpfte Lager nach der Erfindung wird vorteilhafterweise zur Aufhängung eines Motors, insbesondere eines querliegenden Frontmotors, im Rahmen eines Kraftfahrzeuges verwendet. Es kann aber auch beispielsweise zur schwingungsgedämpften Aufhängung einer Waschmaschinentrommel in einem Waschmaschinengestell oder zur Aufhängung einer Fördereinrichtung in einem Rahmen eingesetzt werden. Je nach Anwendungsbereich ist das Lagerelement entweder mit der Einheit oder mit dem Rahmen verbunden. Zu diesem Zweck kann das Lagerelement als Buchse, als Flansch oder ähnliches ausgebildet sein. Denkbar ist auch die Ausbildung des Lagerelementes als Bestandteil der Einheit oder des Rahmens.

Das Tragelement kann gleichfalls als eigenständiges Element ausgebildet sein und am Rahmen bzw. Motor befestigt werden. Eine andere Möglichkeit besteht darin, das Tragelement in den Rahmen oder die Einheit zu integrieren.

Der zwischen Lagerelement und Tragelement angeordnete Tragkörper besteht aus einem elastischen Material, wie Naturkautschuk oder einem elastischen Kunststoff. Er kann sowohl mit dem Lagerelement als auch mit dem Tragelement starr verbunden sein. Zu diesem Zweck kann das Lagerelement beispielsweise im Querschnitt vieleckig ausgebildet werden, um eine formschlüssige Verbindung zwischen Tragkörper und Lagerelement sicherzustellen. Auch das Tragelement kann mit einer entsprechenden Form ausgestaltet sein, beispielsweise Noppen oder Erhebungen, die in den Tragkörper ragen, um eine starre Verbindung mit dem Tragkörper zu gewährleisten. Andererseits ist es denkbar, den Tragkörper beweglich mit dem Lagerelement und/oder dem Tragelement zu verbinden, um eine möglichst spannungsfreie Aufnahme des Tragkörpers zwischen Lagerelement und Tragelement zu ermöglichen. Zu diesem Zweck kann sowohl das Lagerelement als auch das Tragelement mit einer glatten, reibungsarmen Oberfläche ausgebildet sein, die eine Bewegung des Tragkörpers relativ zum Lagerelement bzw. zum Tragelement gestattet.

Je nach Anwendungszweck ist es möglich, entsprechend der Anzahl der verschieden verlaufenden Schwingungsachsen Hohlräume im Tragkörper vorzusehen, von denen jeweils ein Hohlraum im Bereich einer der Schwingungsachsen angeordnet ist. Wird das hydraulisch gedämpfte Lager nach der Erfindung beispielsweise bei einem durch einen querliegenden Frontmotor angetriebenen Kraftfahrzeug mit Fünfganggetriebe verwendet, ergebenen sich fünf verschiedene Achsrichtungen, in die der Motor mit Getriebe relativ zum Kraftfahrzeugrahmen schwingen kann, so daß im Tragkörper fünf Hohlräume ausgebildet werden.

Die Form der Hohlräume wird entsprechend des Anwendungsfalles ausgebildet. So kann der Hohlraum beispielsweise quaderförmig im Tragkörper ausgeformt sein, wobei er sich in Längsrichtung parallel zum Lagerelement erstreckt und die Schwingungsachse lotrecht durch die Ober- und Unterseite des Hohlraumes verläuft. Wird ein so ausgebildeter Hohlraum verformt, entsteht nur eine geringfügige Verformung der Stirnfläche des Hohlraums, so daß eine in etwa lineare Volumenänderung im Verhältnis zur Schwingungsamplitude auftritt. Denkbar wäre auch, den Hohlraum prismenförmig, zylinderförmig oder auch kugelförmig auszubilden.

Ferner kann zur Beeinflussung der Dämpfungseigenschaft des hydraulisch gedämpften Lagers der Hohlraum innerhalb des elastischen Tragkörpers so angeordnet werden, daß er entweder in einem Bereich liegt, der sich stark elastisch verformt, wodurch er eine große Volumenänderung erfährt und die Dämpfung dementsprechend beeinflußt, oder aber in einem Bereich angeordnet ist, der weniger stark verformt wird, so daß die Dämpfungseigenschaften verringert sind.

In einer bevorzugten Ausführungsform ist der Tragkörper zylinderförmig ausgebildet, wobei vorzugsweise die Zylinderform seitlich abgeflacht ist. Durch diese Form des Tragkörpers wird Raum gespart und eine formschlüssige Verbindung mit dem Tragelement ermöglicht. Andererseits ist es möglich, den Tragkörper auch quader- oder prismenförmig auszubilden. In einer anderen Ausführungsform ist der Tragkörper als Kugelsegment ausgebildet, damit er im Tragelement beweglich aufgenommen und spannungsfrei eingebaut werden kann.

Vorteilhaft ist es, wenn der Tragkörper konzentrisch zum Lagerelement angeordnet ist, wodurch es zu einer gleichmäßigen Verteilung der am hydraulisch gedämpften Lager angreifenden Kräfte innerhalb des Tragkörpers kommt. Ein starres Verbinden des Tragkörpers mit dem Lagerelement verhindert bei dieser Ausführungsform ein Verdrehen relativ zum Lagerelement. Durch eine exzentrische Anordnung des Tragkörpers zum Lagerelement in eine vorgegebene Richtung, beispielsweise in Bremsrichtung eines Kraftfahrzeuges, kann die Steifigkeit des Lagers in diese vorgegebene Richtung erhöht und gleichzeitig mehr Raum für Hohlräume in dem vergrößerten Bereich des Tragkörpers zur Verfügung gestellt werden.

Vorteilhaft ist, wenn das Tragelement schalenförmig ausgebildet ist und zumindest teilweise den Tragkörper umgreift, so daß der Tragkörper durch das Tragelement abgestützt wird. In einer anderen Ausführungsform ist das Tragelement als Zylindermantel ausgebildet, wobei vorzugsweise der Zylindermantel seitlich abgeflacht ist, um auf einfache Weise am Rahmen bzw. der Einheit befestigt zu werden. Selbstverständlich kann das Tragelement auch prismenförmig sein. Um den Einbau des Tragkörpers in das Tragelement zu erleichtern, ist es ferner möglich, das Tragelement mehrstückig auszubilden.

In einer weiteren Ausführungsform dient einer der Hohlräume als Reservoir für die Dämpfungsflüssigkeit. Zu diesem Zweck ist ein Teil der Wände des Hohlraums als Membran ausgebildet, die sich während des Komprimierens des Tragkörpers stark verformt und als Pumpe wirkt. Es ist auch denkbar, die Hohlräume des Tragkörpers über einen Verbindungskanal mit einem außerhalb des hydraulisch gedämpften Lagers angeordneten Reservoir zu verbinden.

Weiterhin ist es vorteilhaft, die Hohlräume über ein Rohr in Form eines Ringabschnittes miteinander zu verbinden. Zu diesem Zweck ist im Bereich jedes Hohlraums mindestens eine Öffnung im Rohr vorgesehen, durch die die Dämpfungsflüssigkeit in bzw. aus dem Hohlraum strömen kann. Durch gezielte Wahl des Durchmessers der Öffnung ist es möglich, die Strömungsgeschwindigkeit, mit der die Dämpfungsflüssigkeit in bzw. aus dem Hohlraum strömt, zu beeinflussen, wodurch die Dämpfungsrate entsprechend verändert wird. In einer besonderen Ausführungsform ist innerhalb des Hohlraums mindestens ein Steuernocken vorgesehen, der bei Komprimierung des Tragkörpers ab einem bestimmten Hub die jeweilige Öffnung des Rohrs verschließt, so daß der Hohlraum entweder vollständig verschlossen ist oder, bei mehreren Öffnungen, weniger Dämpfungsflüssigkeit aus dem Hohlraum strömen kann. Es ist auch denkbar, die Hohlräume über einen Kanal miteinander zu verbinden, der in einem kaum komprimierten Abschnitt des Tragkörpers angeordnet ist. Andererseits kann der Kanal auch in einem Abschnitt des Tragkörpers angeordnet werden, der komprimiert wird, so daß der Kanal bei Komprimierung des Tragkörpers ab einem vorbestimmten Hub verschlossen ist.

Die Erfindung wird im folgenden anhand der Zeichnung näher erläutert. Darin zeigen:
- Figur 1: eine schematische Darstellung der Kraftverhältnisse bei einer schwingungsgedämpften Aufhängung eines Motors;
- Figur 2: eine geschnitte Vorderansicht einer ersten Ausführungsform eines hydraulisch gedämpften Lagers mit den daran angreifenden Kräften;
- Figur 3: eine geschnittene Vorderansicht einer zweiten Ausführungsform eines hydraulisch gedämpften Lagers;
- Figur 4: eine geschnittene Seitenansicht des hydraulisch gedämpften Lagers nach der Figur 3;
- Figur 5: eine Vorderansicht des hydraulisch gedämpften Lagers nach der Figur 3;
- Figur 6: eine geschnittene Seitenansicht einer dritten Ausführungsform mit Hohlräumen, deren Seitenflächen nach außen gewölbt sind;
- Figur 7: eine geschnittene Seitenansicht des hydraulischen Lagers nach Figur 6 in belastetem Zustand;
- Figur 8: eine geschnittene Seitenansicht einer vierten Ausführungsform eines hydraulisch gedämpften Lagers mit Hohlräumen, deren Seitenflächen nach innen gewölbt sind;
- Figur 9: eine geschnittene Seitenansicht des hydraulischen Lagers nach Figur 8 in belastetem Zustand;
- Figur 10: ein Diagramm, das den Verlauf der Volumenänderung in Abhängigkeit vom Hub zeigt;
- Figur 11: eine geschnittene Seitenansicht einer fünften Ausführungsform eines hydraulischen Lagers, bei der der Tragkörper schwenkbar im Tragelement gelagert ist; und
- Figur 12: eine geschnittene Vorderansicht eines Hohlraums einer sechsten Ausführungsform eines hydraulisch gedämpften Lagers in vergrößerter Darstellung.

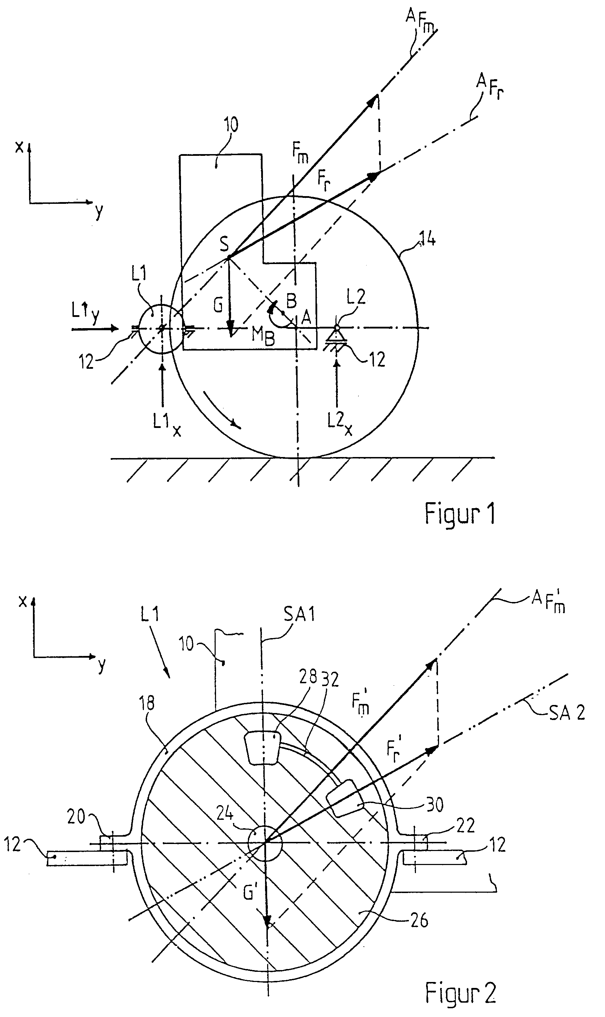

In Figur 1 sind die Kräfte dargestellt, die an der Aufhängung eines querliegenden Frontmotors 10 eines Kraftfahrzeuges mit Vorderradantrieb angreifen. Der Frontmotor 10 ist über ein hydraulisch gedämpftes Lager L1, in Figur 1 links dargestellt, und ein Loslager L2 schwingungsgedämpft in einem Fahrzeugrahmen 12 des Kraftfahrzeuges aufgehängt. Während des Betriebes des Kraftfahrzeuges wird das Drehmoment des Frontmotors 10 über ein im Motorblock integriertes Getriebe an ein Vorderrad 14 übertragen, das in einem Punkt A drehbar am Fahrzeugrahmen 12 gelagert ist. Der Betrag des tatsächlich im Punkt A wirksamen Antriebsdrehmomentes ist abhängig von den Fahrbedingungen, d.h. abhängig von den geschalteten Gängen im Getriebe. Um die an den beiden Lagern L1 und L2 angreifenden Kräfte bestimmen zu können, wird das im Punkt A tatsächlich wirksame Antriebsdrehmoment in ein Drehmoment M_{B} überführt, das in einem angenommenen Drehpunkt B des Frontmotors 10 angreift. Dieses Drehmoment M_{B} würde, sofern der Frontmotor 10 nicht in den beiden Lagern L1 und L2 aufgehängt wäre, eine Drehung des Frontmotors 10 um den Drehpunkt B bewirken. Um die Funktionsweise des hydraulisch gedämpften Lagers L1 näher zu erläutern, wird in diesem Ausführungsbeispiel ein Frontmotor 10 verwendet, dessen Getriebe zwischen Leerlauf und erstem Gang schaltbar ist.

Wird der Frontmotor 10 im Leerlauf betrieben, überträgt das Getriebe des Frontmotors 10 kein Antriebsdrehmoment an das Vorderrad 14, so daß nur eine Gewichtskraft G, die sich aus dem Gewicht des Frontmotors 10 und dem Getriebe ergibt, in einem Schwerpunkt S des Frontmotors 10 angreift. Diese Gewichtskraft G verläuft in negativer x-Richtung und bewirkt in den Lagern L1 und L2 Lagerreaktionskräfte L1ₓ und L2ₓ, die in positiver x-Richtung verlaufen.

Sobald das Getriebe in den ersten Gang geschaltet wird, d.h. das Drehmoment des Frontmotors 10 an das Vorderrad 14 übertragen wird, wirkt in dem angenommenen Drehpunkt B das Drehmoment M_{B}. Durch Division des Drehmomentes M_{B} mit dem Abstand zwischen dem Schwerpunkt S und dem angenommenen Drehpunkt B läßt sich das Drehmoment M_{B} in Form einer im Schwerpunkt S angreifenden Momentenkraft Fₘ darstellen. Die im Schwerpunkt S angreifende Momentenkraft Fₘ wirkt in Richtung einer Achse A_{Fm}, die durch den Schwerpunkt S und die Aufhängung des Frontmotors 10 im hydraulisch gedämpften Lager L1 verläuft.

Da während des Betriebes des Frontmotors 10 im ersten Gang nach wie vor die Gewichtskraft G wirkt, ergibt sich aus der Kombination der Gewichtskraft G und der Momentenkraft Fₘ eine resultierende Kraft Fᵣ, die entlang einer zweiten Achse A_{Fr} durch den Schwerpunkt S verläuft. Der Betrag und die Richtung der resultierenden Kraft Fᵣ wird nur durch den Betrag der Momentenkraft Fₘ bestimmt, da sowohl die Richtung der Momentenkraft Fₘ als auch der Betrag und die Richtung der Gewichtskraft G von der Größe des Drehmomentes M_{B} unbeeinflußt bleiben. Dabei wird sofort ersichtlich, daß bei unterschiedlichen Antriebsdrehmomenten M_{B}, deren Betrag vom geschalteten Gang abhängt, sich der Betrag der Momentenkraft Fₘ und demzufolge der Betrag und die Richtung der resultierenden Kraft Fᵣ ändert.

Der Betrag und die Richtung der resultierenden Kraft Fᵣ bewirkt Lagerreaktionen in den beiden Lagern L1 und L2. In x-Richtung bewirkt die resultierende Kraft Fᵣ in den Lagern L1 und L2 Reaktionskräfte L1ₓ bzw. L2ₓ. In y-Richtung ist nur das Lager L1 in der Lage, die y-Komponente der resultierenden Kraft Fᵣ aufzunehmen, da das Loslager L2 nur Kräften in x-Richtung entgegenwirken kann. Die resultierende Kraft Fᵣ bewirkt im Lager L1 eine Reaktionskraft L1_{y}.

Figur 2 zeigt eine vergrößerte geschnittene Ansicht des hydraulisch gedämpften Lagers L1 der Figur 1. Das hydraulisch gedämpfte Lager L1 hat ein zylinderförmiges Tragelement 18, von dessen Außenumfang in y-Richtung zwei einander gegenüber angeordnete Anschlußelemente 20 und 22 radial abstehen. Jedes der Anschlußelemente 20 und 22 ist über eine Schraub- oder Nietverbindung fest mit dem Fahrzeugrahmen 12 des Fahrzeuges verbunden. Innerhalb des Tragelementes 18 ist eine konzentrisch zum Tragelement 18 verlaufende Lagerbuchse 24 angeordnet, die mit dem Frontmotor 10 verschraubt ist. Zwischen Tragelement 18 und Lagerflansch 24 ist ferner ein elastischer Tragkörper 26 aus gummiartigem Material vorgesehen, der sowohl mit dem Tragelement 18 als auch mit dem Lagerflansch 24, beispielsweise durch Vulkanisieren, fest verbunden ist. Innerhalb des Tragkörpers 26 sind zwei etwa quaderförmige Hohlräume 28 und 30 mit jeweils gleichem radialem Abstand zur Lagerbuchse 24 ausgebildet, die sich in Längsrichtung parallel zur Lagerbuchse 24 erstrecken und im Bereich einer ersten Schwingungsachse SA1 bzw. einer zweiten Schwingungsachse SA2 angeordnet sind und diese schneiden. Die beiden Hohlräume 28 und 30 sind mit einer Dämpfungsflüssigkeit gefüllt und über einen im Tragkörper 26 ausgebildeten Kanal 32 miteinander verbunden.

Wie oben bereits erläutert, ergeben sich, abhängig vom gewählten Gang, unterschiedliche Kräfte, die am Lager L1 angreifen. Wird der Frontmotor 10 im Leerlauf betrieben, greift an der Lagerbuchse 24 eine sich anteilig aus der Gewichtskraft G ergebende Gewichtskraftkomponente G' an, die in x-Richtung durch die Lagerbuchse 24 verläuft. Gerät der Frontmotor 10 in Schwingungen, schwingt der Frontmotor 10 entlang der durch die Lagerbuchse 24 verlaufenden ersten Schwingungsachse SA1, deren Verlauf der Richtung der Gewichtskraftkomponente G' entspricht. Wird der Frontmotor 10 dagegen im ersten Gang betrieben, greift zusätzlich zur Gewichtskraftkomponente G' an der Lagerbuchse 24 die Momentenkraftkomponente Fₘ' an, die sich anteilig aus der Momentenkraft Fₘ ergibt. Aus der Gewichtskraftkomponente G' und der Momentenkraftkomponente Fₘ' ergibt sich eine resultierende Kraftkomponente Fᵣ', die an der Lagerbuchse 24 angreift. Bei Betrieb des Frontmotors 10 im ersten Gang schwingt der Frontmotor 10 entlang der durch die Lagerbuchse 24 verlaufenden zweiten Schwingungsachse SA2, deren Verlauf der Richtung der resultierenden Kraftkomponente Fᵣ' entspricht.

Schwingt der Frontmotor 10 entlang der ersten Schwingungsachse SA1, wird das Volumen des ersten Hohlraums 28 vergrößert bzw. verkleinert, während das Volumen des zweiten Hohlraums 30 etwa gleich bleibt. Dadurch wird die Dämpfungsflüssigkeit über den Kanal 32 zwischen erstem Hohlraum 28 und zweitem Hohlraum 30 hin- und hergepumpt, wodurch die Schwingungen des Frontmotors 10 entlang der ersten Schwingungsachse SA1 gedämpft werden.

Wird der Frontmotor 10 im ersten Gang betrieben, schwingt er entlang der zweiten Schwingungsachse SA2, so daß das Volumen des zweiten Hohlraums 30 verkleinert bzw. vergrößert wird, während das des ersten Hohlraums 28 etwa gleich bleibt, so daß die Dämpfungsflüssigkeit zwischen dem ersten und zweiten Hohlraum 28 bzw. 30 hin- und hergepumpt wird. Durch das Hin- und Herpumpen werden dabei die Schwingungen des Frontmotors 10 entlang der zweiten Schwingungsachse SA2 gedämpft.

In Figur 2 ist eine erste Ausführungsform eines hydraulisch gedämpften Lagers L1 dargestellt, das über zwei Hohlräume 28 und 30 Schwingungen entlang zweier verschiedener Schwingungsachsen SA1 und SA2 dämpft. Durch Vorsehen zusätzlicher Hohlräume im Tragkörper kann das hydraulisch gedämpfte Lager auch entlang zusätzlicher Schwingungsachsen dämpfen.

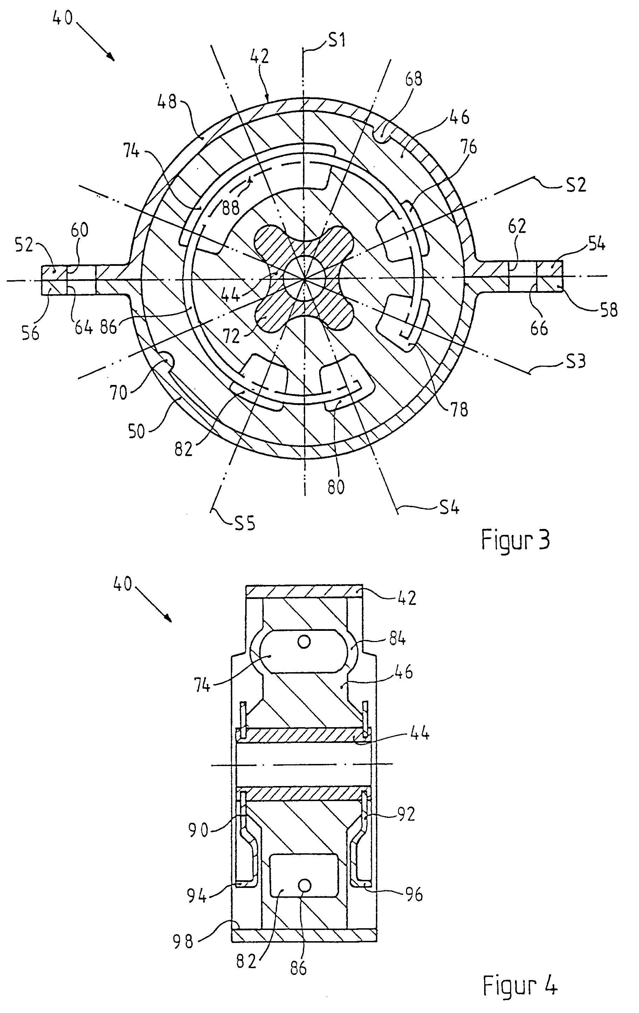

So zeigt Figur 3 eine zweite Ausführungsform eines hydraulisch gedämpften Lagers 40, das zur schwingungsgedämpften Aufhängung eines querliegenden Frontmotors (nicht dargestellt) in einem Fahrzeugrahmen (nicht dargestellt) verwendet wird. Das Lager 40 dämpft entlang fünf verschiedenen Schwingungsachsen S1, S2, S3, S4 und S5. Wird der Frontmotor im Leerlauf betrieben, schwingt er entlang der ersten Schwingungsachse S1, im ersten und zweiten Gang entlang der zweiten Schwingungsachse S2, im dritten und vierten Gang entlang der dritten Schwingungsachse S3 und im fünften Gang entlang der vierten Schwingungsachse S4. Bei Einlegen des Rückwärtsganges schwingt der Frontmotor dagegen entlang der fünften Schwingungsachse S5.

Das hydraulisch gedämpfte Lager 40 hat ein zylinderförmiges Tragelement 42, eine innerhalb des Tragelementes 42 konzentrisch angeordnete, sich annähernd über die gesamte Breite des Tragelements 42 erstreckende Lagerbuchse 44 und einen zwischen Tragelement 42 und Lagerbuchse 44 vorgesehenen elastischen Tragkörper 46, der mit beiden fest verbunden ist. Das Tragelement 42 umfaßt zwei Tragschalen 48 und 50, an deren jeweiligen Enden ein Anschlußflansch 52, 54, 56 bzw. 58 radial nach außen absteht. An jedem Anschlußflansch 52, 54, 56 und 58 ist eine durchgängige Öffnung 60, 62, 64 bzw. 66 ausgebildet, über die das Tragelement 42 durch eine Schraubverbindung fest mit dem Frontmotor bzw. dem Fahrzeugrahmen des Fahrzeuges verbunden wird. Ferner ist an jeder Tragschale 48 und 50 ein radial nach innen abstehender Absatz 68 und 70 vorgesehen, der eine Drehung des Tragkörpers 46 innerhalb des Tragelementes 42 verhindert.

Die Lagerbuchse 44 ist gleichfalls mit vier radialen nach außen abstehenden, gleichmäßig über den Umfang verteilten nockenartigen Erhebungen 72 versehen, die ein Verdrehen der Lagerbuchse 44 innerhalb des Tragkörpers 46 verhindern.

Innerhalb des Tragkörpers 46 sind insgesamt fünf quaderförmige Hohlräume mit jeweils gleichem radialen Abstand zur Lagerbuchse 44 ausgebildet, die mit einer Dämpfungsflüssigkeit gefüllt sind. Die Hohlräume 74, 76, 78, 80 und 82 sind dabei so angeordnet, daß sie jeweils im Bereich einer der Schwingungsachsen S1, S2, S3, S4 bzw. S5 liegen. Der erste Hohlraum 76 ist größer ausgebildet als die anderen Hohlräume 76, 78, 80 und 82 und dient als Reservoir. Zu diesem Zweck sind, wie in Figur 4 dargestellt, seine Seitenwände 84 konvex, d.h. nach außen gewölbt ausgebildet. Untereinander sind die Hohlräume über einen ringförmigen Rohrabschnitt 86 miteinander verbunden, der in jedem Hohlraum 74, 76, 78, 80 bzw. 82 mehrere Drosselöffnungen hat, durch die die Dämpfungsflüssigkeit über den Rohrabschnitt 86 zwischen den Hohlräumen 74, 76, 78, 80 bzw. 82 hin- und herströmen kann.

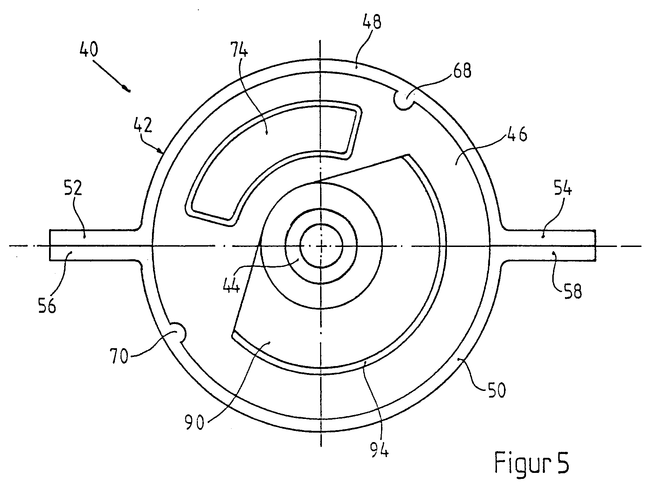

Ferner ist an der Lagerbuchse 44 zu beiden Seiten des Tragkörpers 46 jeweils eine Seitenplatte 90 bzw. 92 durch Bördeln befestigt. Wie in Figur 5 dargestellt, ist die Seitenplatte 90 in etwa halbkreisförmig und an ihrer radial nach außen abstehenden Endkante rechtwinklig so umgebogen, daß ein parallel zur Lagerbuchse 44 verlaufender Randabschnitt 94 entsteht. Die auf der entgegengesetzten Seite des Tragkörpers 46 angeordnete zweite Seitenplatte 92 ist entsprechend ausgebildet. Durch die seitlich am Tragkörper 46 angebrachten Seitenplatten 90 und 92 wird ein seitliches Ausdehnen des Tragkörpers 46 verhindert, so daß die Hohlräume 76, 78, 80 und 82 nur in radialer Richtung zur Lagerbuchse 44 komprimiert oder gedehnt werden können. Die umgebogenen Randabschnitte 94 und 96 dienen als Anschlag für eine innere Mantelfläche 98 des Tragelementes 42 und begrenzen somit den Hub, den die Lagerbuchse 44 relativ zum Tragelement 42 beim Schwingen erfährt. Um Reibungsverluste zu vermeiden, sind die dem Tragkörper 46 zugewandten Flächen der Seitenplatten 90 und 92 beispielsweise mit einem Kunststoff, wie PTFE, beschichtet.

Nachfolgend wird die Funktion des Lagers 40 erläutert. Gerät der Frontmotor beispielsweise in Richtung der zweiten Schwingungsachse S2 in Schwingungen, beginnt sich die Lagerbuchse 44 relativ zum Tragelement 42 entlang der Schwingungsachse S2 zu bewegen. Während dieser Bewegung der Lagerbuchse 44 wird der zweite Hohlraum 76 komprimiert bzw. gedehnt, so daß die Dämpfungsflüssigkeit durch die Drosselöffnungen 88 über den ringförmigen Rohrabschnitt 86 zwischen den Hohlräumen 74, 76, 78, 80 und 82 hin- und herströmt. Während die Volumina des dritten, vierten bzw. fünften Hohlraums 78, 80 bzw. 82 in etwa konstant bleiben, ändert sich das Volumen des als Reservoir dienenden ersten Hohlraums 74, da seine Seitenwände 84 besonders elastisch nachgiebig ausgebildet sind. Durch das Hin- und Herpumpen der Dämpfungsflüssigkeit und den damit verbundenen Energieverlust werden die Schwingungen entlang der zweiten Schwingungsachse S2 wirksam gedämpft. Beginnt der Frontmotor in eine andere Richtung zu schwingen, beispielsweise in Richtung der vierten Schwingungsachse S4, wird entsprechend der vierte Hohlraum 80 komprimiert oder gedehnt und die Dämpfungsflüssigkeit in die anderen Hohlräume 74, 76, 78 und 82 gepumpt, wodurch die Schwingungen gedämpft werden.

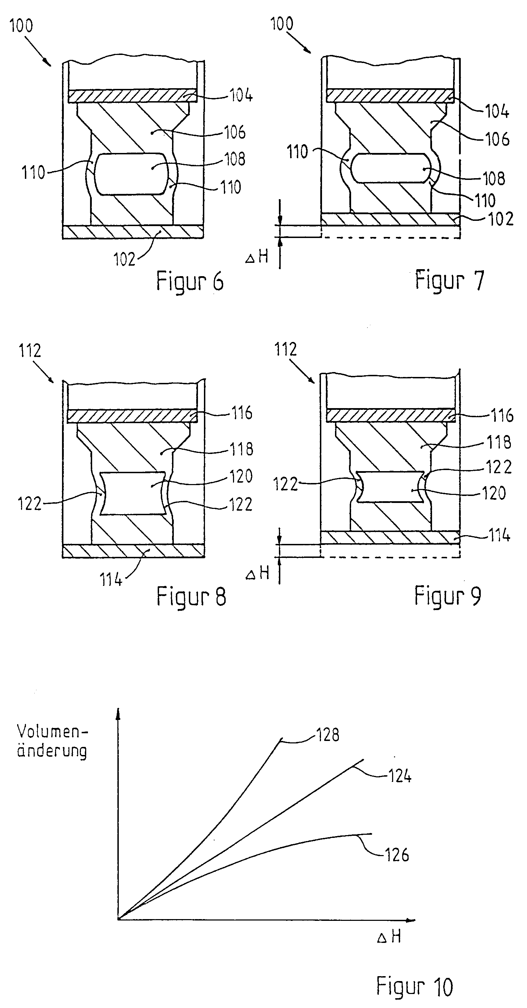

Die Figuren 6 und 7 zeigen ein weiteres Ausführungsbeispiel eines hydraulisch gedämpften Lagers 100 mit einem Tragelement 102, einer Lagerbuchse 104 und einem zwischen Tragelement 102 und Lagerbuchse 104 angeordneten Tragkörper 106. Bei diesem Ausführungsbeispiel werden Hohlräume 108 eingesetzt, deren jeweilige Seitenwände 110 konvex, d.h. nach außen gewölbt ausgebildet sind. Wird der Hohlraum 108 um einen Betrag ΔH komprimiert, werden die Seitenwände 110 gestaucht und nach außen gedrückt. Dadurch kommt es zu einer degressiven Volumenänderung mit größer werdendem Hub ΔH, so daß das hydraulisch gedämpfte Lager ein degressives Dämpfungsverhalten zeigt.

Die Figuren 8 und 9 zeigen ein viertes Ausführungsbeispiel eines hydraulisch gedämpften Lagers 112 mit einem Tragelement 114, einer Lagerbuchse 116 und einem dazwischen angeordneten Tragkörper 118. Der Tragkörper 118 ist mit Hohlräumen 120 versehen, deren jeweilige Seitenwände 122 konkav, d.h. nach innen in Richtung des Hohlraumes 120 gewölbt, verlaufen. Wird der Hohlraum 120 um einen Betrag ΔH komprimiert, werden die elastisch ausgebildeten Seitenwände 122 nach innen gedrückt, was eine progressive Volumenänderung zur Folge hat.

In Figur 10 sind die unterschiedlichen Volumenänderungen in Abhängigkeit vom Hub ΔH dargestellt. Die Kurve 124 zeigt eine lineare Abhängigkeit der Volumenänderung vom Hub ΔH, die bei Hohlräumen mit geraden Seitenwänden auftritt. Eine degressive Volumenänderung, wie sie die Kurve 126 zeigt, erfolgt bei Hohlräumen mit konvexen, d.h. nach außen gewölbten Seitenwänden. Eine progressive Volumenänderung und damit ein progressives Dämpfungsverhalten zeigt die Kurve 128. Solche Volumenänderungen werden durch Hohlräume verursacht, deren Seitenwände konvex, d.h. nach innen gewölbt ausgebildet sind und während des Komprimierungsvorganges des Hohlraumes nach innen gedrückt werden.

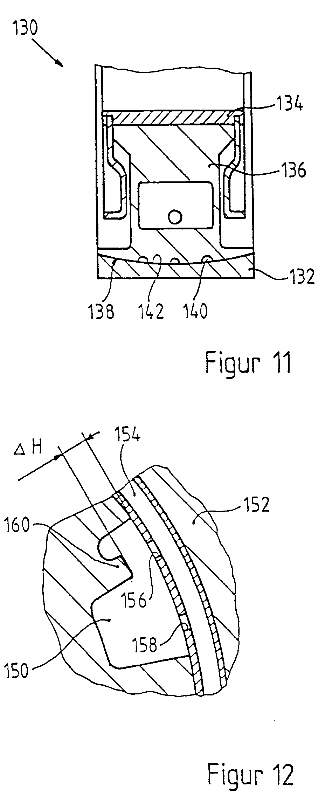

Figur 11 zeigt eine weitere Ausführungsform eines hydraulisch gedämpften Lagers 130 mit einem Tragelement 132, einer Lagerbuchse 134 und einem Tragkörper 136. Der fest mit der Lagerbuchse 134 verbundene Tragkörper 136 ist mit einer leicht nach außen gewölbten Außenoberfläche 138 versehen, in der drei radial umlaufende Schmiernuten 140 ausgebildet sind. Das zylindrisch ausgebildete Tragelement 132 hat eine innere Mantelfläche 142, deren Verlauf in etwa der Außenoberfläche 138 des Tragkörpers 136 entspricht. Durch diese Anordnung ist es möglich, den Tragkörper 136 schwenkbar, einer kardanischen Aufhängung gleich, im Tragelement 132 zu lagern, um beispielsweise Lagetoleranzen während des Einbaus des Lagers 130 auszugleichen.

Figur 12 zeigt eine besondere Ausführungsform eines Hohlraums 150 in einem Tragkörper 152. Der Hohlraum 150 ist über einen ringförmigen Rohrabschnitt 154 mit anderen Hohlräumen verbunden, wobei zwei Drosselöffnungen 156 und 158 ein Ein- und Ausströmen der Dämpfungsflüssigkeit in und aus dem Hohlraum 150 ermöglichen. Innerhalb des Hohlraums 150 ist ferner etwa auf Höhe der Drosselöffnung 156 ein Steuernoppen 160 ausgebildet. Wird der Hohlraum 150 um einen Betrag ΔH komprimiert, verschließt der Steuernoppen 160 die erste Drosselöffnung 156, so daß die Dämpfungsflüssigkeit nurmehr durch die zweite Drosselöffnung 158 aus dem Hohlraum 150 strömen kann. Auf diese Weise ist es möglich, daß das Lager ab einem bestimmten Hub ΔH progressive Dämpfungseigenschaften besitzt.

## Patentansprüche

1. Hydraulisch gedämpftes Lager zur schwingungsgedämpften Aufhängung einer Einheit in einem Rahmen, insbesondere zur schwingungsgedämpften Lagerung eines Motors und/oder eines Getriebes in einem Kraftfahrzeugrahmen, mit einem Lagerelement (24, 44), das mit der Einheit (10) bzw. dem Rahmen (12) verbunden ist, einem Tragelement (18, 42), das mit dem Rahmen (12) bzw. der Einheit (10) verbunden ist, und mit einem zwischen Lagerelement (24, 44) und Tragelement (18, 42) angeordneten elastischen Tragkörper (26, 46), der entlang einer ersten Schwingungsachse (SA1, S1) und mindestens einer zweiten Schwingungsachse (SA2, S2) komprimierbar ist und der einen mit Dämpfungsflüssigkeit gefüllten ersten komprimierbaren Hohlraum (28, 74) und mindestens einen mit der Dämpfungsflüssigkeit gefüllten und mit dem ersten Hohlraum (28, 74) durch ein Verbindungselement verbundenen zweiten komprimierbaren Hohlraum (30, 76) enthält, wobei der erste Hohlraum (28, 74) zumindest annähernd im Bereich der ersten Schwingungsachse (SA1, S1) angeordnet ist, dadurch **gekennzeichnet**, daß der zweite Hohlraum (30, 76) zumindest annähernd im Bereich der zweiten Schwingungsachse (SA2, S2) angeordnet ist, deren Verlauf von dem der ersten Schwingungsachse (SA1, S1) verschieden ist.

2. Hydraulisch gedämpftes Lager nach Anspruch 1, dadurch **gekennzeichnet**, daß der Tragkörper (26, 46) zylinderförmig ausgebildet ist, wobei vorzugsweise die Zylinderform seitlich abgeflacht ist.

3. Hydraulisch gedämpftes Lager nach Anspruch 1 oder 2, dadurch **gekennzeichnet**, daß der Tragkörper (26, 46) konzentrisch zu dem Lagerelement (24, 44) angeordnet und mit diesem starr verbunden ist.

4. Hydraulisch gedämpftes Lager nach einem der vorangehenden Ansprüche, dadurch **gekennzeichnet**, daß das Tragelement (18, 42) schalenförmig ausgebildet ist und zumindest teilweise den Tragkörper (26, 46) umgreift.

5. Hydraulisch gedämpftes Lager nach Anspruch 4, dadurch **gekennzeichnet**, daß das Tragelement (18, 42) als Zylindermantel ausgebildet ist, wobei vorzugsweise der Zylindermantel seitlich abgeflacht ist.

6. Hydraulisch gedämpftes Lager nach einem der vorangehenden Ansprüche, dadurch **gekennzeichnet**, daß am Lagerelement (44) Stützplatten (90, 92) vorgesehen sind, die seitlich beiderseits des Tragkörpers (46) anliegen und die ein Komprimieren des Tragkörpers (46) bevorzugt längs der zweiten Schwingungsachse (S2) zulassen.

7. Hydraulisch gedämpftes Lager nach Anspruch 6, dadurch **gekennzeichnet**, daß die Stützplatten (90, 92) so ausgebildet sind, daß der Tragkörper (46) längs der zweiten Schwingungsachse (S2) nur um eine vorbestimmte Schwingungsamplitude (ΔH) komprimiert werden kann.

8. Hydraulisch gedämpftes Lager nach einem der vorangehenden Ansprüche, dadurch **gekennzeichnet**, daß der erste Hohlraum (74) größer ist als der zweite Hohlraum (76) und als Reservoir für die Dämpfungsflüssigkeit dient.

9. Hydraulisch gedämpftes Lager nach einem der vorangehenden Ansprüche, dadurch **gekennzeichnet**, daß der erste und der zweite Hohlraum (74, 76) sowie gegebenenfalls weitere Hohlräume (78, 80, 82) durch ein Rohr (86) in Form eines Ringabschnittes verbunden sind, welches im Bereich eines jeden Hohlraums (74, 76, 78, 80, 82) mindestens eine Öffnung (88) mit vorbestimmtem Durchmesser hat.

10. Hydraulisch gedämpftes Lager nach einem der vorangehenden Ansprüche, dadurch **gekennzeichnet**, daß mindestens einer der Hohlräume (150) mindestens einen Steuernoppen (160) enthält, der bei Komprimierung des Tragkörpers (152) ab einem vorbestimmten Hub (ΔH) die jeweilige Öffnung (156) des Rohrs (154) verschließt.

11. Hydraulisch gedämpftes Lager nach einem der vorangehenden Ansprüche, dadurch **gekennzeichnet**, daß der Tragkörper (136) schwenkbar im Tragelement (132) gelagert ist.

12. Hydraulisch gedämpftes Lager nach einem der vorangehenden Ansprüche, dadurch **gekennzeichnet**, daß die als Motor (10) mit angeflanschtem Getriebe ausgebildete Einheit, vorzugsweise im vorderen Bereich eines Fahrzeugrahmens (12), aufgehängt ist, daß das als Lagerbuchse (24) ausgebildete Lagerelement mit einem in Fahrtrichtung gesehen vorzugsweise vorderen Abschnitt des Motors (10) verbunden ist, und daß das Tragelement (18) starr am Fahrzeugrahmen (12) befestigt ist.

13. Hydraulisch gedämpftes Lager nach Anspruch 12, dadurch **gekennzeichnet**, daß bei mehreren Hohlräumen (28, 30) die erste Schwingungsachse (SA1), in deren Bereich der erste Hohlraum (28) angeordnet ist, annähernd der Vertikalen entspricht, und daß die weiteren Schwingungsachsen (SA2) mit den weiteren Hohlräumen (30) jeweils mit einer Kraftresultierenden (Fᵣ) aus der Gewichtskraft (G) des Motors (10) und Getriebe und der jeweiligen Kraft (Fₘ) annähernd übereinstimmt, die sich aus dem Antriebsmoment von Motor (10) und Getriebe bei vorgegebenen Fahrbedingungen ergibt.

14. Hydraulisch gedämpftes Lager nach einem der vorangehenden Ansprüche, dadurch **gekennzeichnet**, daß der jeweilige Hohlraum (28, 30, 74, 76, 78, 80, 82) eine Raumform hat, die beim Komprimieren des Hohlraums (28, 30, 74, 76, 78, 80, 82) in einer bevorzugten Richtung größer ist als in anderen Richtungen, und daß die bevorzugte Richtung mit der jeweiligen Schwingungsachse (SA1, SA2, S1, S2, S3, S4, S5) des Tragkörpers (26, 46) übereinstimmt.

15. Hydraulisch gedämpftes Lager nach einem der vorangehenden Ansprüche, dadurch **gekennzeichnet**, daß der jeweilige Hohlraum (28, 108, 120) eine Raumform hat, die eine lineare, progressive oder degressive Volumenänderung abhängig von der zu dämpfenden Schwingungsamplitude ermöglicht.

16. Hydraulisch gedämpfes Lager nach Anspruch 15, dadurch **gekennzeichnet**, daß für eine degressive Volumenänderung über der Schwingungsamplitude die elastischen Seitenwände (110) des Hohlraums (108) im nicht komprimierten Zustand konvex verlaufen.

17. Hydraulisch gedämpfes Lager nach Anspruch 15, dadurch **gekennzeichnet**, daß für eine progressive Volumenänderung über der Schwingungsamplitude die elastischen Seitenwände (122) des Hohlraums (120) im nicht komprimierten Zustand konkav verlaufen.
